# EUROPEAN PATENT SPECIFICATION

(11) **EP 3 700 971 B1**
(45) Date of publication and mention of the grant of the patent: **13.08.2025**
(21) Application number: 18789660.0
(22) Date of filing: 19.10.2018
(51) Int. Cl.: C08K 5/00, C08K 3/22, C08L 9/06, C08L 21/00, B60C 1/00, C08K 5/01, C08L 9/00, C08L 91/06

(54) **COMPOUND FOR LATERAL INSERTS OF RUN-FLAT PNEUMATIC TYRES**
VERBINDUNG FÜR SEITLICHE EINSÄTZE VON NOTLAUFLUFTREIFEN
COMPOSÉ POUR DES INSERTS LATÉRAUX DE PNEUS À AFFAISSEMENT LIMITÉ

(30) Priority: 25.10.2017 IT 201700121310
(43) Date of publication of application: 02.09.2020
(73) Proprietor: Bridgestone Europe NV/SA, 1930 Zaventem (BE)
(72) Inventor: AURISICCHIO, Claudia, 00128 Roma (IT); DI RONZA, Raffaele, 00128 Roma (IT)
(74) Representative: Marchetti, Alessio
(86) International application number: PCT/EP2018/078811
(87) International publication number: WO 2019/081386

(56) References cited:
- WO-A1-2018/202474
- US-A- 4 081 414
- US-A1- 2001 051 685
- US-A1- 2011 213 050
- US-A1- 2013 196 085
- US-A1- 2014 024 745
- US-A1- 2014 027 003

## Description

The present invention relates to a compound for lateral inserts of run-flat pneumatic tyres.

Run-flat pneumatic tyres are pneumatic tyres that in the event of a puncture, allow a car to travel several further kilometers at reduced speed. This effect is possible by virtue of the presence of special rubber inserts located at the sidewalls, which are the parts of the pneumatic tyre that are subjected to greatest stress, especially in the event of a puncture.

In order to ensure the sustainability of the vehicle and to reduce the degradation rate under punctured pneumatic tyre conditions, these lateral inserts are made from materials that are able to provide the insert itself with high stiffness at the high temperatures generated during operation under puncture conditions, and a low hysteresis. Generally, the required stiffness characteristics are ensured by a particular mix of components that are capable of maintaining stiffness at the high temperatures generated during run-flat operating conditions.

As is known to a person skilled in the art, it is possible to improve the duration of such a compound by lowering the carbon black content and consequently lowering the levels of hysteresis. Such a solution would however necessarily result in degradation in terms of stiffness.

The need was therefore felt for a solution that would make it possible to improve the life of a run-flat compound and therefore to lower the hysteresis levels without, thereby, lowering the stiffness levels.

EP3619263 discloses a rubber compound for the preparation of a tread portion of a pneumatic tyre comprising a cross-linkable unsaturated chain polymer base, a filler and a vulcanization system and a wax composed of at least 50% by weight of nonacosanediols.

The inventors of the present invention have found that the use in compounds, for lateral inserts of run-flat pneumatic tyres, of a plasticizing agent characterized by a melting temperature within a specific range is capable of lowering the hysteresis values without worsening the stiffness levels as a result.

The object of the present invention is a lateral insert compound of a run-flat pneumatic tyre comprising a cross-linkable unsaturated chain polymer base, a filler, a plasticizing agent and a curing system; wherein said plasticizing agent consists of an aliphatic chain and has a melting point of between 50 °C and 100 °C,said compound being characterized in that said plasticizing agent is present in compound form in an amount of between 10 and 30 phr.

Here and hereinafter, the term "cross-linkable unsaturated-chain polymer base" refers to any natural or synthetic non-cross-linked polymer capable of assuming all of the chemical-physical and mechanical characteristics typically assumed by elastomers after cross-linking (curing) with sulfur or peroxide systems.

Here and hereinafter, the term curing system refers to a complex of ingredients comprising at least sulfur and accelerating compounds that in the preparation of the compound are added during a final blending stage and have the purpose of promoting the curing of the polymer base once the compound is subjected to a curing temperature.

Preferably, said plasticizing agent has a melting temperature between 60 °C and 90 °C.
.

Preferably, the aliphatic chain has a length of between C30 and C50.

A further object of the present invention is a lateral insert for run-flat pneumatic tyres obtained with the compound, object of the present invention.

A still further object of the present invention is a run-flat pneumatic tyre comprising a lateral insert obtained with the compound of the present invention.

For a better understanding of the present invention, the following examples are provided for illustrative and non-limiting purposes.

### EXAMPLES

Three comparative compounds were prepared (Compounds A - C) and a compound according to the teachings of the present invention (Compound D).

In particular, Compound A is free of plasticizing agent; Compound B differs from Compound A by the fact that, with the aim of lowering the hysteresis, it has a lower quantity of carbon black; Compound C differs from Compound A by the fact that it comprises a plasticizing agent characterized by a melting temperature that is lower than that provided according to the present invention, and Compound D differs from Compound A by the fact that it comprises a plasticizing agent with a melting temperature that is in line with that provided according to the present invention.

The compounds described in the examples were obtained according to the procedure reported below:
- preparation of the compounds -

### (1st mixing step)

Before the start of the mixing, a mixer with tangential rotors and an internal volume of between 230 and 270 liters was loaded with the cross-linkable polymer base, the carbon black, the phenolic acid and, when provided, the plasticizing agent, thus reaching a fill factor of 66-72%.

The mixer was operated at a speed of 40-60 revolutions/minute, and the mixture thus formed was discharged once a temperature of 140-160 °C had been reached.

### (2nd mixing step)

The mixture obtained from the previous step was reprocessed in a mixer that was operated at a speed of 40-60 revolutions/minute and, thereafter, discharged once a temperature of 130-150 °C had been reached.

### (3rd mixing step)

The vulcanization system (Sulfur, accelerants, antioxidants / antiozonants, Zinc Oxide and stearic acid) was added to the mixture obtained from the previous step, reaching a fill factor of 63-67%.

The mixer was operated at a speed of 20-40 revolutions/minute, and the mixture thus formed was discharged once a temperature of 100-110 °C had been reached.

Table I lists the compositions in phr of the six compounds.

**TABLE I**

| | A | B | C | D |
|---|---|---|---|---|
| S-SBR | 70 | 70 | 70 | 70 |
| BR | 30 | 30 | 30 | 30 |
| Carbon black | 45 | 30 | 45 | 45 |
| Plasticizing agent* | -- | -- | 20 | -- |
| Plasticizing agent** | -- | -- | -- | 20 |
| Phenolic resin | 2.24 | 2.24 | 2.24 | 2.24 |
| Sulfur | 6.86 | 6.86 | 6.86 | 6.86 |
| Zinc oxide | 5 | 5 | 5 | 5 |
| Stearic acid | 1 | 1 | 1 | 1 |
| TMQ | 0.7 | 0.7 | 0.7 | 0.7 |
| CBS | 4.2 | 4.2 | 4.2 | 4.2 |
| MBTS | 1.1 | 1.1 | 1.1 | 1.1 |
| Reinforcing resin | 3.5 | 3.5 | 3.5 | 3.5 |
| 6PPD | 2 | 2 | 2 | 2 |

S-SBR is a polymer base obtained through a solution polymerization process with an average molecular weight, respectively, of 800-1500x10³ and of 500-900x10³, with a styrene content of between 20 and 45%.

BR is a butadiene rubber with a 1,4-cis content of at least 40%.

The plasticizing agent* is pentadecanoic acid methyl ester characterized by a melting temperature of about 20 °C (less than that provided according to the present invention)

The plasticizing agent** is a saturated paraffin with a C40 chain characterized by a melting temperature of 70 °C (in line with that provided according to the present invention).

TMQ is the acronym for poly(1,2-dihydro-2,2,4-trimethylquinoline) and is used as an antioxidant.

CBS is the acronym for benzothiazyl-cyclohexyl-sulfenamide and is used as a vulcanization accelerant.

The reinforcing resin is a phenol-formaldehyde type resin.

6PPD is the acronym for N-1,3-dimethylbutyl-N'-phenyl-paraphenylenediamine and is used as an antioxidant agent.

The compounds described above were tested in order to evaluate the stiffness and hysteresis characteristics thereof. As is known to a person skilled in the art, the measurement of the elastic modulus E' (30 °C) provides an assessment of the stiffness, while the measurement of tan δ (200 °C) provides an assessment of hysteresis. The elastic modulus E' (30 °C) and tan δ (200 °C) values were obtained according to the ISO 4664 standard.

Table II lists the stiffness and hysteresis results indexed against the comparative Compound A. In particular, the higher values are those relating to a higher stiffness and a lower hysteresis.

**TABLE II**

| | A | B | C | D |
|---|---|---|---|---|
| Stiffness | 100 | 90 | 95 | 100 |
| Hysteresis | 100 | 110 | 105 | 120 |

From the values listed in Table II, it is clear how a decrease in the quantity of carbon black (Compound B) or the use of a plasticizing agent, characterized by a melting point that is different than that provided by the present invention (Compound C), even if this leads to the desired decrease in hysteresis, nonetheless results in an undesired decrease in stiffness.

In contrast, the use of a plasticizing agent characterized by a melting temperature within the range according to the present invention (Compound D) is capable of ensuring a reduction in the hysteresis value, without this being reflected in a lowering of the stiffness levels.

## Claims

1. Compound of a lateral insert of a run-flat pneumatic tyre comprising a cross-linkable unsaturated chain polymer base that is capable of assuming all of the chemical-physical and mechanical characteristics of an elastomer after cross-linking, a filler, a plasticizing agent and a curing system; wherein said plasticizing agent consists of an aliphatic chain and has a melting temperature of between 50 °C and 100 °C, said compound being **characterized in that** said plasticizing agent is present in compound form in an amount of between 10 and 30 phr.

2. Compound according to claim 1, **characterized in that** said plasticizing agent has a melting temperature of between 69 °C and 90 °C.

3. Compound according to any one of the preceding claims, **characterized in that** said aliphatic chain has a length of between C30 and C50.

4. Lateral insert for run-flat pneumatic tyres obtained with a compound according to one of the preceding claims.

5. Run-flat pneumatic tyre comprising a lateral insert according to claim 4.

## Patentansprüche

1. Mischung eines seitlichen Einsatzes eines Notlaufluftreifens, umfassend eine vernetzbare ungesättigte Polymerkettenbasis, die nach dem Vernetzen in der Lage ist, alle chemisch-physikalischen und mechanischen Eigenschaften eines Elastomers zu übernehmen, einen Füllstoff, ein Weichmachermittel und ein Vulkanisierungssystem; wobei das Weichmachermittel aus einer aliphatischen Kette besteht und eine Schmelztemperatur zwischen 50 °C und 100 °C aufweist, wobei die Mischung **dadurch gekennzeichnet ist, dass** das Weichmachermittel in Form einer Mischung in einer Menge zwischen 10 und 30 phr vorliegt.

2. Mischung nach Anspruch 1, **dadurch gekennzeichnet, dass** das Weichmachermittel eine Schmelztemperatur zwischen 69 °C und 90 °C aufweist.

3. Mischung nach einem der vorstehenden Ansprüche,
**dadurch gekennzeichnet, dass** die aliphatische Kette eine Länge von zwischen C30 und C50 aufweist.

4. Seitlicher Einsatz für Notlaufluftreifen, erhalten mit einer Mischung nach einem der vorstehenden Ansprüche.

5. Notlaufluftreifen, umfassend einen seitlichen Einsatz nach Anspruch 4.

## Revendications

1. Composé d'un insert latéral d'un pneumatique à roulage à plat comprenant une base de polymère à chaîne insaturée réticulable qui est capable de prendre toutes les caractéristiques physico-chimiques et mécaniques d'un élastomère après réticulation, une charge, un agent plastifiant et un système de durcissement ; dans lequel ledit agent plastifiant est constitué d'une chaîne aliphatique et a une température de fusion comprise entre 50 °C et 100 °C, ledit composé étant **caractérisé en ce que** ledit agent plastifiant est présent sous forme de composé en une quantité comprise entre 10 et 30 phr.

2. Composé selon la revendication 1, **caractérisé en ce que** ledit agent plastifiant a une température de fusion comprise entre 69 °C et 90 °C.

3. Composé selon l'une quelconque des revendications précédentes, **caractérisé en ce que** ladite chaîne aliphatique a une longueur comprise entre C30 et C50.

4. Insert latéral pour pneumatique à roulage à plat obtenu avec un composé selon l'une quelconque des revendications précédentes.

5. Pneumatique à roulage à plat comprenant un insert latéral selon la revendication 4.
